# EUROPÄISCHE PATENTSCHRIFT

(11) **EP 3 737 490 B1**
(45) Veröffentlichungstag und Bekanntmachung des Hinweises auf die Patenterteilung: **02.10.2024**
(21) Anmeldenummer: 18833408.0
(22) Anmeldetag: 17.12.2018
(51) Int. Cl.: B01D 53/86, C04B 7/36

(54) **SCHADSTOFFMINDERUNG VON ABGASEN BEI DER THERMISCHEN MATERIALBEHANDLUNG**
POLLUTANT REDUCTION OF EXHAUST GASES IN THE THERMAL TREATMENT OF MATERIALS
RÉDUCTION DE POLLUANTS DE GAZ D'ÉCHAPPEMENT LORS DU TRAITEMENT DE MATÉRIAU THERMIQUE

(30) Priorität: 10.01.2018 DE 102018200248
(43) Veröffentlichungstag der Anmeldung: 18.11.2020
(73) Patentinhaber: thyssenkrupp Polysius GmbH, 59269 Beckum (DE); thyssenkrupp AG, 45143 Essen (DE)
(72) Erfinder: STENDER, Timo, 58730 Fröndenberg (DE)
(74) Vertreter: thyssenkrupp Intellectual Property GmbH
(86) Internationale Anmeldenummer: PCT/EP2018/085162
(87) Internationale Veröffentlichungsnummer: WO 2019/137737

(56) Entgegenhaltungen:
- WO-A1-2012/159137
- DE-A1- 102004 018 571
- DE-A1- 102013 109 977
- DE-A1- 102014 100 896

## Beschreibung

Die vorliegende Erfindung betrifft Verfahren zur Minderung von Schadstoffen in Abgasen der thermischen Materialbehandlung der Klinkerherstellung und entsprechende Anlagen.

Zementöfen werden heutzutage häufig mit hohen Ersatzbrennstoffraten gefeuert. Dieses führt dazu, dass die Abgastemperaturen nach Vorwärmer auf bis zu größer 400°C ansteigen. Die Abwärme wird typischerweise in der Rohmühle zur Materialtrocknung verwendet. Ist die Feuchte der Rohmaterialien eher gering, wird nur ein geringer Anteil der Wärme tatsächlich in der Rohmühle benötigt. Nach der Rohmühle liegt typischerweise eine Abgastemperatur kleiner 100°C vor.

Abhängig vom Wärmebedarf in der Rohmühle, liegt diese Temperatur jedoch nur in einem Teil des gesamten Abgases vor. Der weitere Anteil (Mühlen-Bypass) kann separat gekühlt werden. Die Abgastemperatur in nachgeschalteten üblichen Entstaubungsfiltern befindet sich dann typischerweise bei 120°C oder etwas darüber. Außerdem ist es möglich den gesamten Abgasstrom vor dem Eintritt in die Rohmühle durch Wassereintrag zu quenchen, sofern ein Wärmeüberschuss vorliegt. Ist die Rohmühle nicht im Betrieb, wird der Abgasstrom typischerweise in einem Kühlturm auf eine ausreichend niedrige Filtertemperatur gekühlt, um die Filter nicht durch zu hohe Temperaturen zu schädigen.

In Zementöfen werden zwangsläufig verschiedene Schadstoffe, wie Stickoxide (NOx), Kohlenmonoxide (CO) und Kohlenwasserstoffe (HC) erzeugt bzw. freigesetzt. Eine Minderung dieser Schadstoffe erfolgt im Stand der Technik mit katalytischen Systemen. Für die Minderung von Stickoxiden ist dabei üblicherweise ein Reduktionsmittel erforderlich. In der Regel wird hierfür Ammoniak eingesetzt. Um eine Deaktivierung durch Ammoniumsulfate, die sich in Abhängigkeit der Konzentrationen von Schwefeloxiden und Ammoniak sowie der Betriebstemperatur bilden, zu vermeiden, ist i.d.R. eine minimale Betriebstemperatur größer 180°C erforderlich. Befindet sich der Katalysator in Reingasschaltung nach dem Entstaubungsfilter ist daher im Stand der Technik eine zusätzliche Temperaturerhöhung erforderlich.

Da die Bildung der Ammoniumsulfate reversibel ist, ist gemäß Stand der Technik zumindest eine temporäre Aufheizung auf höhere Temperaturen von z.B. 240°C erforderlich, wodurch erhöhte Energie- und Betriebskosten verursacht werden.

Als Stand der Technik können in diesem Zusammenhang etwa die DE 10 2008 013 065 A1 oder die DE 10 2014 108 150 A1 sowie die DE 10 2004 018 571 A1 und die DE102014100896 A1 genannt werden.

Entsprechende Ausführungen gelten auch allgemein für die thermische Materialbehandlung, d.h. bei der thermischen Behandlung von Erzen und ähnlichen Materialien.

Aufgabe der vorliegenden Erfindung war es, die Nachteile des Standes der Technik zu vermeiden und verbesserte Anlagen und Verfahren für die thermische Materialbehandlung zur Klinkerherstellung zur Verfügung zu stellen. Diese sollten sich unter anderem durch Verringerung der Schadstoffe und ökonomischere betriebsweise auszeichnen.

Diese und weitere, den Fachmann bei Betrachtung der vorliegenden Beschreibung ersichtlichen, Aufgaben werden durch die nachfolgend beschriebenen Gegenstände, sowie insbesondere die Gegenstände der Ansprüche gelöst, wobei die Unteransprüche bevorzugte Ausgestaltungen darstellen.

Weitere bevorzugte und vorteilhafte Ausgestaltungen ergeben sich aus der folgenden Beschreibung.

Der Ausdruck "und/oder" bedeutet im Rahmen der vorliegenden Erfindung, dass sowohl die einzelnen Elemente, die mit diesem Ausdruck verbunden sind, als auch eine Kombination der einzelnen Elemente umfasst ist.

Im Rahmen der vorliegenden Erfindung bedeutet der Begriff "Mehlsplitting", dass das Mehl im Vorwärmer zumindest teilweise nicht vor der letzten bzw. obersten Zyklonstufe aufgegeben wird, sondern zumindest teilweise vor der zweitobersten Stufe.

Gegenstand der vorliegenden Erfindung sind Verfahren zur Minderung von Schadstoffen in Abgasen bei der thermischen Materialbehandlung in der Klinkerherstellung, bei denen die Abgase beim Eintritt in eine Entstaubungsvorrichtung eine Temperatur von größer oder gleich 150°C aufweisen.

Weiterhin sind Gegenstand der vorliegenden Erfindung entsprechende Anlagen.

Detaillierte Ausführungen zu den einzelnen Gegenständen ergeben sich aus den Ansprüchen sowie der folgenden Beschreibung.

Um eine katalytische Minderung erfolgreich zu ermöglichen, wird im Rahmen der vorliegenden Erfindung die Abgastemperatur vor dem Katalysator bzw. vor dem katalytischen Filter so eingestellt, dass zumindest temporär eine ausreichende Temperatur zur Austreibung der Ammoniumsulfate möglich ist.

In bevorzugten Ausführungsformen der vorliegenden Erfindung ist die Temperatur beim Eintritt in die Entstaubungsvorrichtung größer oder gleich 180°C, weiter bevorzugt größer oder gleich 200°C, besonders bevorzugt größer oder gleich 240°C.

Hierfür ist es erforderlich ein filterndes Material auszuwählen, dass eine ausreichende Stabilität im angestrebten Temperaturbereich besitzt. Demgemäß werden im Rahmen der vorliegenden Erfindung bevorzugt in der Entstaubungsvorrichtung Filtermaterialien eingesetzt, die eine Temperaturbeständigkeit von 240°C oder höher besitzen, bevorzugt werden Filtermaterialien ausgewählt aus der Gruppe bestehend aus Keramik, PTFE und Glasfasern eingesetzt.

Außerdem wird in weiteren Ausführungsformen die Abgastemperatur zumindest temporär erhöht, bevorzugt durch Mehlsplitting im Vorwärmer. Dadurch entfällt im Rahmen der vorliegenden Erfindung die Notwendigkeit, den Abgasstrom vor der katalytischen Minderung, d.h. der katalytischen Entstickung, der Oxidation von CO und Kohlenwasserstoffen, oder einer Kombination aus beidem nochmals zu erwärmen.

In manchen Ausführungsformen, die nicht zum beanspruchten Gegenstand der Erfindung gehören, wird das Mehlsplitting im Direktbetrieb - ohne den Betrieb der Rohmühle - durchgeführt, da hier bereits ein höheres Temperaturniveau vorliegt.

In einigen Ausführungsformen ist es möglich, die Abgastemperatur durch eine installierte Brennkammer zu erhöhen, was weniger bevorzugt ist.

In einigen Ausführungsformen der vorliegenden Erfindung kann der Brennstoffeintrag in den Vorwärmer erhöht werden. Außerdem ist es in weiteren Ausführungsformen der vorliegenden Erfindung möglich zusätzlich regenerative oder rekuperative Wärmetauscher einzusetzen.

In Ausgestaltungsformen der vorliegenden Erfindung, bei denen ein Mehlsplitting vorgenommen wird, erhöht sich hierdurch die Abgastemperatur, da weniger Wärme auf das Mehl übertragen wird.

Die katalytische Minderung ist im Rahmen der vorliegenden Erfindung
I) eine katalytische Entstickung,
II) eine Oxidation von CO und Kohlenwasserstoffen, oder
III) eine katalytische Entstickung und Oxidation von CO und Kohlenwasserstoffen.

Im Rahmen der vorliegenden Erfindung kann die Zone für die katalytische Minderung, bevorzugt katalytische Entstickung, entweder an einer Entstaubungsvorrichtung, bevorzugt Staubfilter, der an die Eintrittstemperaturen gemäß vorliegende Erfindung angepasst ist, anschließen, d.h. stromabwärts in Bezug auf die Abgase, und eine Vorrichtung enthaltend einen Entstickungs- oder Oxidations-Katalysator umfassen.

In besonders vorteilhaften Ausführungsformen der vorliegenden Erfindung werden Staubfilter und Entstickungs-Katalysator miteinander zu katalytischen Filtern kombiniert.

In Ausführungsformen der vorliegenden Erfindung, bei denen die Entstaubung und die katalytische Minderung in Form von katalytischen Filtern kombiniert werden, ergeben sich vorteilhafte Effekte unter anderem dadurch, dass der Anlagenaufwand verringert wird.

Für die Ausführungsformen, in denen die Entstaubung mit der katalytischen Minderung, bevorzugt katalytischen Entstickung, kombiniert wird, wird bevorzugt das katalytische Material in oder auf die Filter ein- bzw. aufgebracht. Diese Kombination der beiden Minderungsstufen, wird durch die Anpassung der Betriebstemperatur mittels der erfindungsgemäßen Maßnahmen ermöglicht.

Sowohl für die Ausführungsformen, in denen die Zone für die katalytische Minderung, bevorzugt katalytische Entstickung, durch separaten Staubfilter und Katalysator gebildet werden, als auch für die Ausführungsformen, in denen die Zone für die katalytische Entstickung durch einen kombinierten katalytischen Filter gebildet wird, ist eine weitere, zusätzliche Erwärmung des Abgasstromes nicht erforderlich.

In bevorzugten Ausführungsformen der vorliegenden Erfindung erfolgt nach dem Zusammenführen des aus der Rohmühle austretenden Abgases und des aus dem Mühlenbypass austretenden Abgases keine weitere, zusätzliche Erwärmung des Abgasstromes.

Ein entscheidender Aspekt der vorliegenden Erfindung ist, dass die Beeinflussung der Temperatur des Abgases nicht nur vor dem Katalysator zur Entstickung erfolgt, sondern bereits deutlich vorher in den Prozess eingegriffen wird. Dadurch ist der apparative Aufwand deutlich geringer. Ferner lässt sich das Verfahren besser regeln.

Im Rahmen der vorliegenden Erfindung wird in verschiedenen, bevorzugten, Ausführungsformen der Brennstoffeintrag im Ofensystem durch erhöhte Zufeuerung im heißen Bereich (Ofeneinlauf/Calcinator/Steigschacht) erhöht. Hierdurch wird erreicht, dass sich das Temperaturniveau im System und folglich auch die Abgastemperatur erhöht.

Die vorliegende Erfindung beruht unter anderem darauf, dass eine andere Fahrweise eingesetzt wird; die Fahrweise der vorliegenden Erfindung beruht darauf, dass die Wärmebereitstellung durch das Ofensystem, bevorzugt Mehlsplit und Feuerung, erreicht wird.

Die vorliegende Erfindung beruht unter anderem auch darauf, dass an der Mühle ein Gasbypass existiert; durch diese Fahrweise kann die Abgastemperatur im Verbund Betrieb erhöht werden.

Entsprechend wird in verschiedenen Ausführungsformen der vorliegenden Erfindung keine Erwärmung des Abgasstromes direkt vor dem Entstickungs- oder Oxidations-Katalysator durch Wärmetauscher und/oder Brenner vorgenommen.

In verschiedenen, bevorzugten, Ausführungsformen der vorliegenden Erfindung wird keine Verbrennungseinheit, insbesondere keine Verbrennungseinrichtung zur Stromerzeugung, nach der Mahltrocknung und vor der katalytischen Minderung, bevorzugt katalytischen Entstickung, eingesetzt bzw. angeordnet.

In einer optionalen Ausführungsform der vorliegenden Erfindung ist eine Wärmeregulierung direkt am Entstickungs- oder Oxidations-Katalysator möglich. Diese Ausführungsform ist weniger bevorzugt.

Die im Rahmen der vorliegenden Erfindung angesprochene katalytische Entstickung bzw. Entstickungs-Reaktion ist eine fachübliche, dem Fachmann hinlänglich bekannte SCR (selektive katalytische Reduktion).

Entsprechend können im Rahmen der vorliegenden Erfindung für die katalytische Entstickung die dem Fachmann geläufigen Katalysatoren für eine SCR eingesetzt werden. Bevorzugt werden diese Katalysatoren ausgewählt aus der Gruppe bestehend aus Vanadium, Wolfram und Titan. Im Rahmen dieser katalytischen Entstickung können ebenfalls übliche, dem Fachmann geläufige Reduktionsmittel zudosiert werden, bevorzugt solche ausgewählt aus der Gruppe bestehend aus Ammoniak, Ammoniakwasser, Harnstoff und Mischungen davon.

Die im Rahmen der vorliegenden Erfindung angesprochene katalytische Oxidation von CO und Kohlenwasserstoffen bzw. Oxidations-Reaktion ist eine fachübliche, dem Fachmann hinlänglich bekannte Reaktion.

Entsprechend können im Rahmen der vorliegenden Erfindung für die katalytische Oxidation von CO und Kohlenwasserstoffen die dem Fachmann geläufigen Katalysatoren für eine solche Reaktion eingesetzt werden. Bevorzugt werden Edelmetallkatalysatoren verwendet.

Im Rahmen der vorliegenden Erfindung kann in bevorzugten Ausführungsformen die Mischung der aus der Rohmühle austretenden Abgase und der aus dem Mühlenbypass austretenden Abgase durch eine Steuervorrichtung geregelt werden. In einigen bevorzugten Ausführungsformen kann dies mittels Klappen und/oder Schiebern passieren.

In weiteren bevorzugten Ausführungsformen der vorliegenden Erfindung erfolgt die Regelung der Betriebstemperatur in Abhängigkeit des Wärmebedarfs des Katalysators für die katalytische Minderung.

Es ist in weiteren Ausgestaltungen der vorliegenden Erfindung möglich, eine Entschwefelung des Abgases vor der katalytischen Behandlung durchzuführen. Dieses kann beispielsweise mit Sorbentien, wie Kalkhydrat und Natriumbicarbonat erfolgen. Diese werden in das Abgas eingedüst und reagieren mit den SO₂ bzw. dem SO₃ im Abgas. Die Abscheidung der Reaktionsprodukte erfolgt zumindest teilweise im Staubfilter. Wird z.B. Kalkhydrat direkt im Vorwärmer aufgegeben, kann das Reaktionsprodukt auch im Produkt eingebunden werden.

Die vorliegende Erfindung weist eine Reihe von vorteilhaften technischen Effekten auf.

Durch die vorliegende Erfindung kann die thermische Materialbehandlung, insbesondere die Klinkerherstellung, energieeffizienter ausgestaltet werden. Durch die vorliegende Erfindung entstehen geringere Kosten, sowohl im Hinblick auf die apparative Ausgestaltung als auch im Hinblick auf die notwendige Energiezufuhr.

Die vorliegende Erfindung ist mithin ökonomischer.

Die vorliegende Erfindung ist im Hinblick auf die Minderung von Schadstoffen in Abgasen bei der thermischen Materialbehandlung, insbesondere der Klinkerherstellung, gründlicher und effizienter; es werden aufgrund der vorliegenden Erfindung weniger Schadstoffe freigesetzt.

Bevorzugte Ausführungsformen der vorliegenden Erfindung betreffen die katalytische Entstickung.

Alle bevorzugten Ausführungsformen, welche vorstehend im Zusammenhang mit dem Verfahren beschrieben sind, gelten entsprechend analog auch für die Anlage.

Die Komponenten der erfindungsgemäßen Anlagen stehen miteinander in Wirkverbindung, d.h. sind durch geeignete Rohrleitungen etc. miteinander in einer Weise verbunden, welche die allgemeine Funktionsfähigkeit der Vorrichtung gewährleistet. Die dafür erforderlichen Maßnahmen sind einem Fachmann bekannt.

Die Erfindung wird nunmehr durch Bezugnahme auf die Figuren näher beschrieben. Dabei bedeuten gleiche Bezugsziffern gleiche Merkmale. Die Figuren sind schematisch und nicht maßstabsgetreu. Ebenso sind in den Figuren nicht alle fachüblichen Anlagenbauteile dargestellt; diese sind dem Fachmann hinlänglich bekannt und entsprechend aus Gründen der Übersichtlichkeit nicht angeführt. Die abstrahierende Darstellung der Figuren beschränkt die vorliegende Erfindung in keiner Weise.

In den Figuren bedeuten die Pfeile die Flussrichtung des Abgases der Klinkerherstellung.

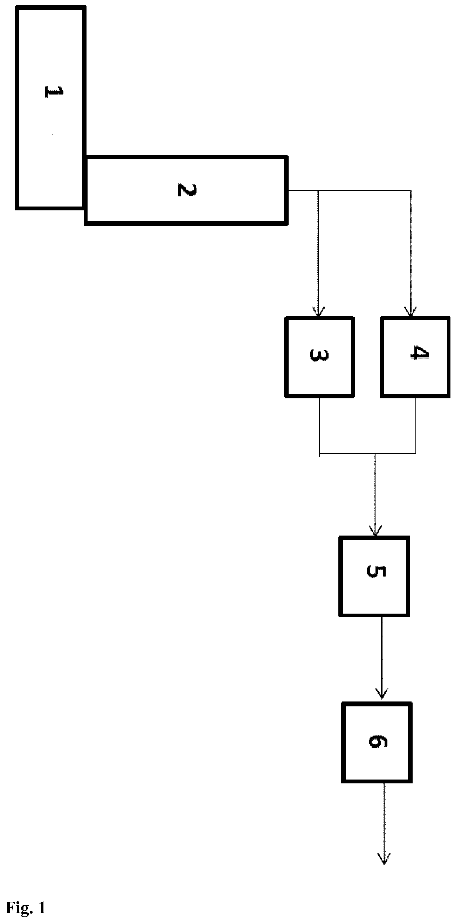

Figur 1 illustriert schematisch eine Anlage für die Klinkerherstellung, bei der die Abgase, die aus dem Ofen 1 und dem Vorwärmer 2 austreten, in zwei Teilströme aufgeteilt werden, wobei der eine Teilstrom optional durch einen Kühlturm 3 geleitet wird und der andere Teilstrom durch ein Anlagenteil 4 für die Mahltrocknung (Rohmühle). Nach der Mahltrocknung 4 werden die beiden Teilströme miteinander vereinigt und der resultierende vereinigte Gasstrom in eine Entstaubung 5 geführt und anschließend über einen Katalysator 6 zur Entstickung.

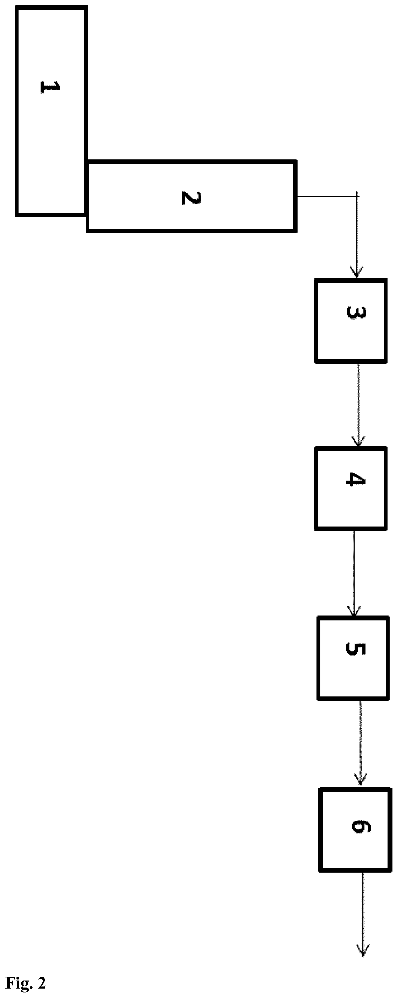

Figur 2, welche nicht den Gegenstand der beanspruchten Erfindung darstellt, illustriert schematisch eine Anlage für die Klinkerherstellung, bei der die Abgase, die aus dem Ofen 1 und dem Vorwärmer 2 austreten, nicht aufgeteilt werden, sondern nacheinander optional zunächst durch einen Kühlturm 3 und dann obligatorisch durch ein Anlagenteil 4 für die Mahltrocknung geleitet werden. Der Gasstrom wird dann in eine Entstaubung 5 geführt und anschließend über einen Katalysator 6 zur Entstickung geleitet.

Sowohl in Figur 1, als auch in Figur 2 ist mithin jeweils eine optionale Ausgestaltung dargestellt, bei der ein Kühlturm 3 vorhanden ist.

### Bezugszeichenliste:

- 1: Ofen
- 2: Vorwärmer
- 3: Kühlturm (optional)
- 4: Mahltrocknungszone (Rohmühle)
- 5: Entstaubungszone
- 6: Katalysatorzone

## Patentansprüche

1. Verfahren zur Minderung von Schadstoffen in Abgasen bei der thermischen
Materialbehandlung in
der Klinkerherstellung bei dem die Abgase beim Eintritt in eine
Entstaubungsvorrichtung eine Temperatur von größer oder gleich 150°C aufweisen, **dadurch gekennzeichnet, dass**
a) ein Teil der Ofenabgase zur Rohmühle geführt wird und ein weiterer Teil der Ofenabgase über einen Mühlenbypass an der Rohmühle vorbei geführt wird, und
b) das aus der Rohmühle austretende Abgas und das aus dem Mühlenbypass austretende Abgas vor der Entstaubungsvorrichtung zusammengeführt werden,
und nach dem Zusammenführen der beiden Abgasströme und vor dem Eintritt in eine Zone
I) für die katalytische Entstickung,
II) für die Oxidation von CO und Kohlenwasserstoffen, oder
III) für die katalytische Entstickung und die Oxidation von CO und Kohlenwasserstoffen
keine weitere Erwärmung notwendig ist.

2. Verfahren nach Anspruch 1, **dadurch gekennzeichnet, dass** die Abgastemperatur von größer oder gleich 150°C erreicht wird, indem entweder
i) im Vorwärmer ein Mehlsplitting vorgenommen wird, oder
ii) im Vorwärmer, Calcinator, Ofeneinlauf und/oder Steigschacht der Brennstoffeintrag erhöht wird, oder
iii) im Vorwärmer, sowohl ein Mehlsplitting vorgenommen wird als auch der Brennstoffeintrag erhöht wird.

3. Verfahren nach Anspruch 1 oder 2, **dadurch gekennzeichnet, dass** die Temperatur bei größer oder gleich 180 °C, bevorzugt größer oder gleich 200°C, weiter bevorzugt größer oder gleich 240°C liegt.

4. Verfahren nach einem der Ansprüche 1 bis 3, **dadurch gekennzeichnet, dass** die Mischung der Abgase in Schritt b) durch eine Steuervorrichtung geregelt wird, bevorzugt mittels Klappen und/oder Schiebern.

5. Verfahren nach einem der Ansprüche 1 bis 4, **dadurch gekennzeichnet, dass** die Betriebstemperatur in der Anlage zur Klinkerherstellung zusätzlich durch Brennstoffzufuhr im Ofeneinlauf, im Calcinator und/oder Steigschacht erhöht wird.

6. Verfahren nach einem der Ansprüche 1 bis 5, **dadurch gekennzeichnet, dass** zur Einstellung der Temperatur der Gase vor Eintritt in die Entstaubungsvorrichtung zusätzlich rekuperative und/oder regenerative Wärmetauscher eingesetzt werden.

7. Verfahren nach einem der Ansprüche 1 bis 6, **dadurch gekennzeichnet, dass** in der Entstaubungsvorrichtung Filtermaterialien eingesetzt werden, die eine Temperaturbeständigkeit von 240°C oder höher besitzen, bevorzugt ausgewählt aus der Gruppe bestehend aus Keramik, PTFE und Glasfasern.

8. Verfahren nach einem der Ansprüche 1 bis 7, **dadurch gekennzeichnet, dass** die Regelung der Betriebstemperatur in Abhängigkeit des Wärmebedarfs des Katalysators für die folgende katalytische Reaktion, bevorzugt Entstickungsreaktion, erfolgt.

9. Anlage zur Verminderung des Stickoxid-Gehalts oder des CO- und Kohlenwasserstoffgehalts von Ofenabgasen in der Klinkerherstellung, insbesondere zur Durchführung des Verfahrens gemäß einem der Ansprüche 1 bis 8, **dadurch gekennzeichnet, dass** jeweils in Strömungsrichtung der Abgase gesehen
a) nach einem Vorwärmer und/oder Calcinator eine Vorrichtung zur Aufteilung des Abgasstromes angeordnet ist, durch die ein Teil des Abgasstromes in eine Rohmühle geführt wird und ein anderer Teil des Abgasstromes an der Rohmühle vorbeigeführt wird,
b) nach der Rohmühle eine Vorrichtung angeordnet ist, durch die der durch die Rohmühle geführte Abgasstrom und der an der Rohmühle vorbeigeführte Abgasstrom vereinigt werden,
c) nach dieser Vorrichtung eine Entstaubungsvorrichtung angeordnet ist, die bei Temperaturen von größer oder gleich 160°C betrieben wird,
d) nach der Entstaubungsvorrichtung eine Vorrichtung
I) für die katalytische Entstickung,
II) für die Oxidation von CO und Kohlenwasserstoffen, oder
III) für die katalytische Entstickung und die Oxidation von CO und Kohlenwasserstoffen
der Abgase angeordnet ist.

10. Anlage nach Anspruch 9, **dadurch gekennzeichnet, dass** sie zusätzlich
e) eine Vorrichtung zur Aufgabe des Rohmehls in den Vorwärmer vor der zweitobersten Stufe, oder
f) eine Vorrichtung zur Erhöhung des Brennstoffeintrags im Vorwärmer, Calcinator, Ofeneinlauf und/oder Steigschacht, oder
g) eine Vorrichtung zur Aufgabe des Rohmehl in den Vorwärmer vor der zweitobersten Stufe und eine Vorrichtung zur Erhöhung des Brennstoffeintrags im Vorwärmer, Calcinator, Ofeneinlauf und/oder Steigschacht
umfasst.

11. Anlage nach einem der Ansprüche 9 bis 10, **dadurch gekennzeichnet, dass** die Anlage eine Steuervorrichtung für die Mischung der Abgase in Schritt b) umfasst, durch die geregelt wird, dass die beiden Abgasströme in einem Verhältnis miteinander gemischt werden, dass die Temperatur von größer oder gleich 160°C, bevorzugt größer oder gleich 180°C, mehr bevorzugt größer oder gleich 200°C, noch mehr bevorzugt größer oder gleich 240°C eingestellt wird, wobei diese Steuerung bevorzugt mittels Klappen und/oder Ventilen erfolgt.

12. Anlage nach einem der Ansprüche 9 bis 11, **dadurch gekennzeichnet, dass** die Anlage vor der Entstaubungsvorrichtung zusätzlich rekuperative und/oder regenerative Wärmetauscher umfasst.

## Claims

1. process for reducing pollutants in waste gases in the thermal material treatment of clinker production, in which the waste gases have a temperature of greater than or equal to 150°C
when they enter a dedusting device, **characterised in that**
a) a part of the furnace exhaust gases is led to the raw mill and another part of the furnace exhaust gases is led past the raw mill via a mill bypass, and
b) the exhaust gas exiting the raw mill and the exhaust gas exiting the mill bypass are combined upstream of the dedusting device,
and after the merging of the two exhaust gas flows and before entering a zone
I) for catalytic denitrification,
II) for the oxidation of CO and hydrocarbons, or
III) for catalytic denitrification and the oxidation of CO and hydrocarbons no further heating is necessary.

2. process according to claim 1, **characterised in that** the exhaust gas temperature of greater than or equal to 150°C is achieved by either
i) flour splitting is carried out in the preheater, or
ii) the fuel input is increased in the preheater, calciner, furnace inlet and/or riser shaft, or
iii) in the preheater, both flour splitting is carried out and the fuel input is increased.

3. process according to claim 1 or 2, **characterised in that** the temperature is greater than or equal to 180°C, preferably greater than or equal to 200°C, more preferably greater than or equal to 240°C.

4. process according to one of claims 1 to 3, **characterised in that** the mixture of the exhaust gases in step b) is regulated by a control device, preferably by means of flaps and/or slides.

5. process according to one of claims 1 to 4, **characterised in that** the operating temperature in the clinker production plant is additionally increased by feeding fuel into the kiln inlet, the calciner and/or the riser shaft.

6. process according to one of claims 1 to 5, **characterised in that** recuperative and/or regenerative heat exchangers are additionally used to adjust the temperature of the gases before they enter the dedusting device.

7. process according to one of claims 1 to 6, **characterised in that** filter materials are used in the dedusting device which have a temperature resistance of 240°C or higher, preferably selected from the group consisting of ceramics, PTFE and glass fibres.

8. process according to one of claims 1 to 7, **characterised in that** the operating temperature is controlled as a function of the heat requirement of the catalyst for the subsequent catalytic reaction, preferably denitrification reaction.

9. installation for reducing the nitrogen oxide content or the CO and hydrocarbon content of kiln exhaust gases in clinker production, in particular for carrying out the process according to one of claims 1 to 8, **characterised in that**, in each case as seen in the direction of flow of the exhaust gases
a) downstream of a preheater and/or calciner, a device for splitting the exhaust gas stream is arranged, through which part of the exhaust gas stream is fed into a raw mill and another part of the exhaust gas stream is fed past the raw mill,
b) a device is arranged downstream of the raw mill by means of which the exhaust gas flow passing through the raw mill and the exhaust gas flow passing the raw mill are combined,
c) a dedusting device is arranged downstream of this device, which is operated at temperatures of greater than or equal to 160°C,
d) after the dedusting device, a device
I) for catalytic denitrification,
II) for the oxidation of CO and hydrocarbons, or
III) for catalytic denitrification and the oxidation of CO and hydrocarbons of the exhaust gases.

10. installation according to claim 9, **characterised in that** it additionally
e) a device for feeding the raw meal into the preheater before the second highest stage, or
f) a device for increasing the fuel input in the preheater, calciner, furnace inlet and/or riser shaft, or
g) a device for feeding the raw meal into the preheater before the second upper stage and a device for increasing the fuel input in the preheater, calciner, kiln inlet and/or riser shaft
includes.

11. installation according to one of claims 9 to 10, **characterised in that** the installation comprises a control device for the mixing of the exhaust gases in step b), by which it is controlled that the two exhaust gas streams are mixed with each other in a ratio such that the temperature is set to greater than or equal to 160°C, preferably greater than or equal to 180°C, more preferably greater than or equal to 200°C, still more preferably greater than or equal to 240°C, this control preferably being effected by means of flaps and/or valves.

12. installation according to one of claims 9 to 11, **characterised in that** the installation additionally comprises recuperative and/or regenerative heat exchangers upstream of the dedusting device.

## Revendications

1. Procédé de réduction des polluants présents dans les gaz résiduaires lors du traitement thermique de la production de clinker, dans lequel les gaz résiduaires ont une température supérieure ou égale à 150°C lorsqu'ils entrent dans un dispositif de dépoussiérage, **caractérisé par le fait que**
a) une partie des gaz d'échappement du four est acheminée vers le broyeur brut et une autre partie des gaz d'échappement du four est acheminée vers le broyeur brut via une dérivation du broyeur, et
b) les gaz d'échappement sortant du broyeur brut et les gaz d'échappement sortant de la dérivation du broyeur sont combinés en amont du dispositif de dépoussiérage,
et après la fusion des deux flux de gaz d'échappement et avant l'entrée dans une zone
I) pour la dénitrification catalytique,
II) pour l'oxydation du CO et des hydrocarbures, ou
III) pour la dénitrification catalytique et l'oxydation du CO et des hydrocarbures aucun autre chauffage n'est nécessaire.

2. procédé selon la revendication 1, **caractérisé par le fait que** la température des gaz d'échappement supérieure ou égale à 150°C est obtenue soit par
i) le fractionnement de la farine est effectué dans le préchauffeur, ou
ii)l' apport de combustible est augmenté dans le préchauffeur, le calcinateur, l'entrée du four et/ou l'arbre de la colonne montante, ou
iii) dans le préchauffeur, le fractionnement de la farine est effectué et l'apport de combustible est augmenté.

3. procédé selon la revendication 1 ou 2, **caractérisé par** une température supérieure ou égale à 180°C, de préférence supérieure ou égale à 200°C, plus préférentiellement supérieure ou égale à 240°C.

4. procédé selon l'une des revendications 1 à 3, **caractérisé par le fait que** le mélange des gaz d'échappement à l'étape b) est régulé par un dispositif de commande, de préférence au moyen de clapets et/ou de glissières.

5. procédé selon l'une des revendications 1 à 4, **caractérisé par le fait que** la température de fonctionnement de l'installation de production de clinker est également augmentée par l'alimentation en combustible de l'entrée du four, du calcinateur et/ou de l'arbre de la colonne montante.

6. procédé selon l'une des revendications 1 à 5, **caractérisé par le fait que** des échangeurs de chaleur récupérateurs et/ou régénérateurs sont également utilisés pour ajuster la température des gaz avant qu'ils n'entrent dans le dispositif de dépoussiérage.

7. procédé selon l'une des revendications 1 à 6, **caractérisé par** l'utilisation, dans le dispositif de dépoussiérage, de matériaux filtrants ayant une résistance à la température égale ou supérieure à 240°C, choisis de préférence dans le groupe constitué par les céramiques, le PTFE et les fibres de verre.

8. Procédé selon l'une des revendications 1 à 7, **caractérisé par le fait que** la température de fonctionnement est contrôlée en fonction du besoin en chaleur du catalyseur pour la réaction catalytique ultérieure, de préférence la réaction de dénitrification.

9. Installation destinée à réduire la teneur en oxyde d'azote ou la teneur en CO et en hydrocarbures des gaz d'échappement des fours lors de la production de clinker, en particulier pour mettre en œuvre le procédé selon l'une des revendications 1 à 8, **caractérisée par le fait que**, dans chaque cas, vu dans le sens de l'écoulement des gaz d'échappement
a) en aval d'un préchauffeur et/ou d'un calcinateur, un dispositif de division du flux de gaz d'échappement est disposé, par lequel une partie du flux de gaz d'échappement est acheminée vers un broyeur brut et une autre partie du flux de gaz d'échappement est acheminée au-delà du broyeur brut,
b) un dispositif est disposé en aval du broyeur brut au moyen duquel le flux de gaz d'échappement traversant le broyeur brut et le flux de gaz d'échappement traversant le broyeur brut sont combinés,
c) un dispositif de dépoussiérage est disposé en aval de ce dispositif, qui fonctionne à des températures supérieures ou égales à 160°C,
d) après le dispositif de dépoussiérage, un dispositif
I) pour la dénitrification catalytique,
II) pour l'oxydation du CO et des hydrocarbures, ou
III) pour la dénitrification catalytique et l'oxydation du CO et des hydrocarbures des gaz d'échappement.

10. installation selon la revendication 9, **caractérisée par le fait qu'**elle comprend en outre
e) un dispositif d'alimentation de la farine crue dans le préchauffeur avant le deuxième étage le plus élevé, ou
f) un dispositif permettant d'augmenter l'apport de combustible dans le préchauffeur, le calcinateur, l'entrée du four et/ou l'arbre de la colonne montante, ou
g) un dispositif d'alimentation de la farine crue dans le préchauffeur avant le deuxième étage supérieur et un dispositif d'augmentation de l'apport de combustible dans le préchauffeur, le calcinateur, l'entrée du four et/ou l'arbre de la colonne montante
comprend.

11. Installation selon l'une des revendications 9 à 10, **caractérisée par le fait que** l'installation comprend un dispositif de commande pour le mélange des gaz d'échappement à l'étape b), par lequel il est contrôlé que les deux flux de gaz d'échappement sont mélangés l'un à l'autre dans un rapport tel que la température est fixée à une valeur supérieure ou égale à 160°C, de préférence supérieure ou égale à 180°C, plus préférentiellement supérieure ou égale à 200°C, encore plus préférentiellement supérieure ou égale à 240°C, cette commande étant de préférence effectuée au moyen de clapets et/ou de vannes.

12. Installation selon l'une des revendications 9 à 11, **caractérisée par le fait que** l'installation comprend en outre des échangeurs de chaleur récupérateurs et/ou régénérateurs en amont du dispositif de dépoussiérage.
